# EUROPEAN PATENT APPLICATION

(11) **EP 2 367 339 A1**
(43) Date of publication of application: **21.09.2011**
(21) Application number: 10002852.1
(22) Date of filing: 18.03.2010
(51) Int. Cl.: H04M 1/05, H04M 1/725, H04M 1/60, H04B 1/38

(54) **Wearable housing for electronic modules**

(71) Applicant: novero GmbH, 40468 Düsseldorf (DE)
(72) Inventor: Schmitz, Uwe, 40229 Düsseldorf (DE)
(74) Representative: Gesthuysen, von Rohr & Eggert

(57) **Abstract**

The invention relates to a personally wearable controller for transmitting operating signals to a remotely located electronic device (1, 2) over a short-range wireless communication link 7. The controller (4) comprises a mechanical carrier component (5) preferably in the form of a ring to be worn on a finger of a user or in the form of a bracelet to be worn on a wrist of a user. It further comprises an electronic control unit comprising an electronic core element (6) with a chip set to perform the intended control functions as well as the functions for the wireless communication link (7), an antenna (18) for wireless communication with the remotely located electronic device (1; 2), a user interface (9) to operate the control unit and an energy supply unit (10), in particular in the form of a rechargeable battery. In the inventive controller all parts of the electronic control unit are located in a housing (11) that is a unit completely separate from the mechanical carrier component (5). The housing (11) is fixedly or, preferably, detachably connected to the mechanical carrier component (5). Preferably the housing (11) is designed as a decorative jewelry component or a decorative jewelry component (12) is mounted on a front face of the housing (11).

## Description

The invention relates to a personally wearable controller for transmitting operating signals to a remotely located electronic device over a short-range wireless communication link. In particular the invention relates to a controller with the features of the preamble of claim 1.

In the prior art forming the starting point of the invention (US 2006/0164383 A1) a hand wearable controller is housed in a ring worn by a user on one of the fingers. The ring forms the mechanical carrier component of the controller. An electronic control unit housed in the ring is used to interact by a short-range wireless communication link with a remotely located electronic device, in particular with a mobile phone, a smart phone, a PDA (personal digital assistant), a laptop, or any other electronic device intended to be remotely controlled.

In the prior art personally wearable controller the electronic control unit comprises a small mechanical user interface in the form of a joy-stick to operate the control unit.

The controller of the prior art is a custom-made product, because it integrates the electronic control unit with the mechanical carrier component. The ring being the mechanical carrier component has one specific size. For a different ring sizes there must be offered a different hand wearable controller.

For the purpose of this patent application a number of terms used here are defined as follows:
A "mechanical carrier component" is any kind of basis that can be worn by a user, in particular a pendant on a chain, a brooch, and preferably a ring to be worn on a finger of a user or a bracelet to be worn on a wrist of a user.
A "short-range wireless communication link" is preferably, however not exclusively, a Bluetooth communication link. Other types of wireless communication links use e.g. Wi-Fi or IR communication standards, or a modem WPAN standard. The range of this type of wireless communication is up to some meters, usually with a largest distance of 10 to 20 m. Both, the Bluetooth-standard as well as the Wi-Fi-standard, requires a basic frequency around 2,4 GHz which is a wavelength of about 12 cm. The electronic control unit has an antenna for wireless communication with the remotely located electronic device. (See also Weyers "Integrated Circuits for a WPAN System", Verlag Dr. Hut, Munich 2010, ISBN 978-3-86853-355-2.)
A "decorative jewelry component" includes true jewelry components as e.g. pearls, gem stones or the like as well as costume jewelry components of colored glass etc. It can also include a decorative component in the form of a sheet or front face of gold, silver or other decorative materials.
A "wireless personal communication system" comprises at least one communication module and at least one "base unit" remote from the communication module, in particular, but not exclusively a mobile phone or a personal digital assistant. The base unit is connected to the communication unit by a "short-range wireless communication link".

The advantage of the prior art personally wearable controller is that the user is able to interact with the remotely located electronic device spontaneously. There is no need to retrieve a remote control from a pocket of a jacket or from a handbag, because it is simply carried on the hand of the user.

In combination with a mobile phone, a headset for a mobile phone, a PDA or the like the hand wearable controller can e.g. accept an incoming call by manipulating the user interface on the controller without removing the e.g. mobile phone from the handbag. Many further applications of a hand wearable controller of this kind are explained in the prior art document cited above.

The object of the present invention is to provide a personally wearable controller in a construction to avoid the necessity to have the controller totally custom-made.

Above mentioned object of the present invention is met with a personally wearable controller comprising the features of the preamble of claim 1 together with the features of the characterizing part of claim 1.

The idea of the invention is that all parts of the electronic control unit are in a housing and that this housing is a unit that is completely separate from the mechanical carrier component, in particular from the ring. The ring can be selected in the correct size to fit on the finger of the user's hand. Having found the precisely fitting ring it can be connected with the housing either fixedly or, preferably, detachably. So the ring is a decorative part on the finger of the user and it is the mechanical carrier. The complete electronic system of the controller is provided in the separate housing.

In the preferred version of the invention the mechanical carrier component is a ring to be worn on a finger of a user or a bracelet to be worn on a wrist of a user.

In a preferred embodiment the housing as such is designed as a decorative jewelry component. It will resemble e.g. a large pearl or a large gemstone. The total size of the jewelry item will probably not exceed the size of a large signet ring. In a variation thereof the housing may be self contained with a decorative jewelry component mounted on a front face of the housing facing away from the finger or wrist of the user.

The connection between housing and ring can be made permanently, e.g. by welding or brazing or adhesive bonding. The preferred connection, however, is a detachable connection by way of e.g. a screw joint, the most preferred version, or a clip joint. In a clip joint the housing may have a form or structure that allows to press the housing onto the ring or bracelet in order to snap the housing into place.

The essential idea behind the inventive concept is to separate the mechanical carrier component completely from the electronic component so that the mechanical carrier component, in particular the ring or bracelet, can come in different sizes and in different designs according to the user's demand. On the other hand the electronic control unit can be designed and manufactured separately either by mass production of all parts or partly or wholly custom-made, in particular in combination with a decorative jewelry component.

Of course, the user interface can be either on the outside of the housing or can be accessible from the outside of the housing, e.g. through an opening in the housing. Many ideas regarding the user interface can be obtained also from the prior art mentioned above.

A particularly preferred version of the invention is characterized in that the housing as such is movable relative to the mechanical carrier component or has a movable or deformable part that has the function of the user interface and a control operation is performed by manipulating the movable housing as such or the movable or deformable part of the housing, in particular like manipulation of a push button. Here, it is simply the housing as such that is used as the user interface of the electronic control unit.

The housing as such may be formed as a decorative jewelry component resembling the design of a large pearl or a large gemstone. Pushing the housing towards the mechanical carrier component, in particular the ring or bracelet, performs the control operation, e.g. accepting an incoming call or finishing a call on the mobile phone being the remotely located electronic device.

In a very preferred embodiment of the invention the remotely located electronic device is a headset of a mobile phone. Here the controller has e.g. a Bluetooth link with the headset and the headset has a Bluetooth link with the mobile phone or the controller has a Bluetooth link with the mobile phone which as such has a Bluetooth link with the headset.

Now, the present invention is further explained with reference to the drawings. The drawings show only preferred, but not limiting embodiments of the invention.
- Fig. 1: shows the basic concept of a hand wearable controller with a finger ring as a mechanical carrier component,
- Fig. 2: a schematic view of a first preferred embodiment of a hand wearable controller and
- Fig. 3: a schematic view of a second preferred embodiment of a hand wearable controller.

Once again reference is made to the definitions given in the introductory part of the description.

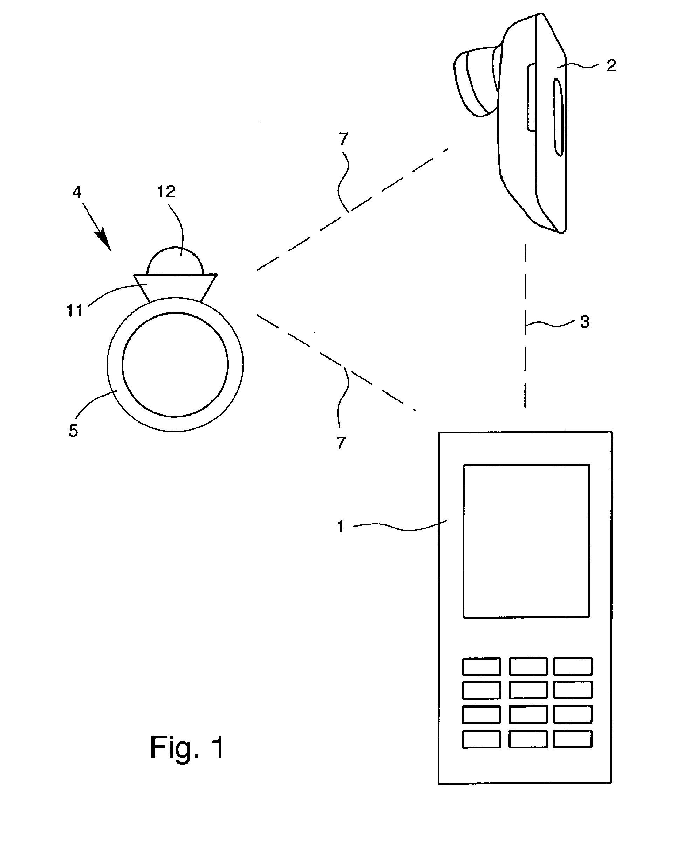

Fig. 1 shows in general a personally wearable controller for transmitting operating signals to a remotely located electronic device which indicated in Fig. 1 as a mobile phone 1. A headset 2 is connected to the mobile phone 1 by means of a short-range wireless communication link 3 which nowadays usually uses the Bluetooth standard. As said above, also other standards can be used to establish such wireless communication link, e.g. Wi-Fi, IR or the like (e.g. WPAN). Future standards still to be developed for short-range wireless communication shall be included as well.

The first wireless link 3 between the mobile phone 1 as the electronic device and the associated headset 2 with usually have the design of a typical wireless personal communication system.

The controller 4 here has a mechanical carrier component 5 in the form of a finger ring to be worn on a finger of user. The mechanical carrier component 5 can also have the form of a bracelet to be worn on a wrist of a user. In alternative embodiments the mechanical carrier component can be the basis of a pendant to be worn on a chain, a basis of a brooch or the like or any other personally wearable mechanical basis. Hereafter the mechanical carrier component 5 will also be mentioned directly as the ring 5.

The controller 4 comprises an electronic control unit that itself comprises an electronic core element 6 with a chip set to perform the intended control functions as well as the functions of a wireless communication link 7, an antenna 8 for wireless communication with the remotely located electronic device 1, a user interface 9 to operate the control unit, and an energy supply unit 10 which preferably and usually is a rechargeable battery pack.

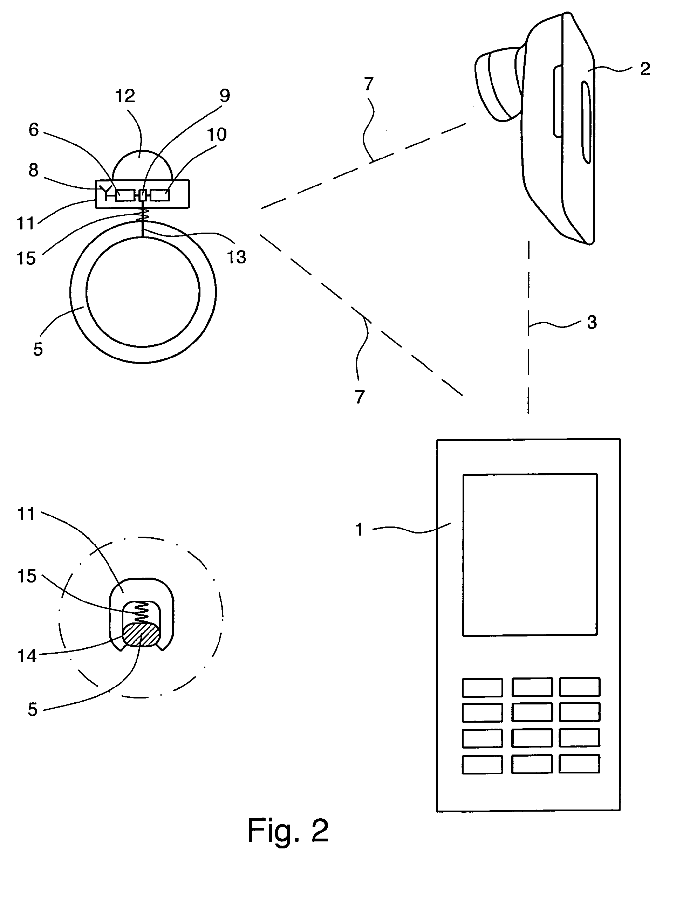

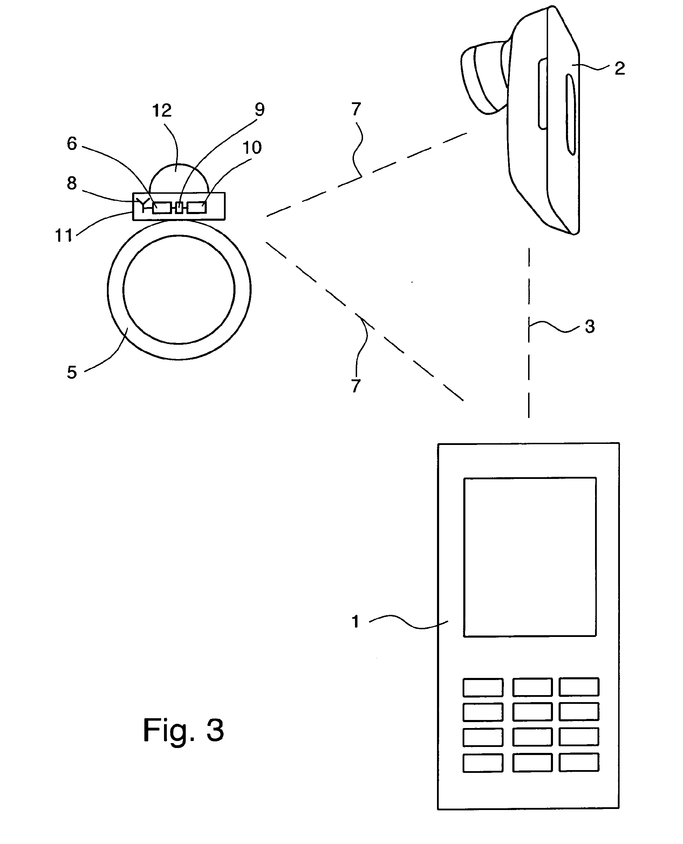

The different components of the electronic control unit are indicated in the schematic views in Fig. 2 and Fig. 3.

Fig. 1 already shows the mechanical carrier component 5 in the form of the finger ring 5 to be completely separate from the electronic control unit. All parts of the electronic control unit are located in a housing 11 that is a unit completely separate from the mechanical carrier component 5. The housing 11 is fixedly or, preferably, detachably connected to the mechanical carrier component 5, namely the ring 5.

The inventive hand wearable controller has a ring 5 that can come in different sizes and designs freely selectable by a user. There is no need to specifically design the ring 5 to house any of the electronic items of the electronic control unit. On the other hand, the housing 11 of the electronic control unit contains all parts of the electronic control unit. It can be placed on any mechanical carrier component 5, in particular on any ring 5 or any bracelet.

Fig. 1 of the drawings shows a preferred embodiment of the invention in that the housing 11 is designed as a decorative jewelry component 12. The housing 11 may resemble a large hemispherical gemstone 12 on a base carrier. Concealed within the fake gemstone 12 is the electronic control unit. The alternative shown in Fig. 2 and 3 has a decorative jewelry component 12 mounted on a front face of the housing 11 facing away from the ring 5 or bracelet.

The housing 11 can be connected to the mechanical carrier component 5 either fixedly (i. e. by welding, brazing or adhesive bonding) or detachably, in particular by means of a screw joint 13 (as shown in Fig. 2 and Fig. 3) or alternatively also by means of a clip joint 14. This version is shown in the separate view of the controller in Fig. 3 of the drawings.

Altogether the inventive hand wearable controller comes as a decorative jewelry item, either a decorative finger ring or a decorative bracelet. The second function as an electronic control unit is effectively concealed by the specific design.

Nevertheless, the construction is so that the ring 5 or bracelet can be selected to perfectly fit the size of finger or wrist of the user while the electronic control unit in the housing 11 is placed on the ring 5 or bracelet later after selecting the mechanical carrier component 5.

In general it is a possible version that the user interface 9 is on the outside of the housing 11 or is accessible from the outside of the housing 11.

Fig. 2 and 3 show two different embodiments of the invention. In the embodiment of Fig. 2 the housing 11 as such is movable relative to the ring 5. The double headed arrow shows the direction of movement of the housing 11 relative to the ring 5. The housing 11 is biased upwardly in Fig. 2 by a spring element 15 or the like. The spring may be mounted around the screw joint 13. By pressing the housing 11 like manipulating a push button a control operation is performed, e.g. accepting an incoming call on the mobile phone 1.

Fig. 3 shows a different version where the housing 11 as such is contacting the ring 5 but has a movable or deformable part that has the function of the user interface 9. In Fig. 3 the control operation is performed by pushing on the hemispherical gemstone 12 on top of the housing 11. It deforms the housing 11 and this deformation is processed by the electronic core element 6 as control signal.

The separate sketch in Fig. 2 shows the version of a clip joint 14 between housing 11 and ring 5. The housing 11 of thermoplastic material has clip legs forming the clip joint 14 and a compression spring 15 between the bottom of the housing 11 and the outside of the ring 5. The compression spring 15 or a separate mechanical item can be used as a switching element to perform the intended control operation.

The present embodiment shows the remotely located electronic device as a mobile phone 1 with a headset 2 as a preferred application of the invention. Also an MP-3-player or the like may be an interesting electronic device for use with such a hand wearable controller.

The present patent application is one of the following related applications:
- EP.........."System of jewelry items" Attorney-reference; 09.0478.2
- EP .......... "Hand wearable controller for a remotely located electronic device" Attorney-reference: 10.0019.2
- EP .......... "Communication item" Attorney-reference: 10.0020.2
- EP .......... "Communication item as a pendant on a choker" Attorney-reference: 10.0084.2
- EP .......... "Communication item as a pendant on a necklace" Attorney-reference 10.0085.2
- EP .......... "Wireless audio headset with an ear-piece" Attorney reference 10.0086.2

## Claims

1. Personally wearable controller for transmitting operating signals to a remotely located electronic device (1; 2) over a short-range wireless communication link (7),
the controller (4) comprising
a mechanical carrier component (5) and
an electronic control unit comprising an electronic core element (6) with a chip set to perform the intended control functions as well as the functions for the wireless communication link (7), an antenna (18) for wireless communication with the remotely located electronic device (1; 2), a user interface (9) to operate the control unit, and an energy supply unit (10), in particular in the form of a rechargeable battery,
**characterized in that**
all parts of the electronic control unit are located in a housing (11) that is a unit completely separate from the mechanical carrier component (5), and
the housing (11) is fixedly or, preferably, detachably connected to the mechanical carrier component (5).

2. Controller according to claim 1, **characterized in that** the mechanical carrier component (5) is provided in the form of a ring to be worn on a finger of a user or in the form of a bracelet to be worn on a wrist of a user.

3. Controller according to claim 1 or 2, **characterized in that** the housing (11) is designed as a decorative jewelry component or a decorative jewelry component (12) is mounted on a front face of the housing (11).

4. Controller according to any one of the preceding claims, **characterized in that**
the housing (11) is connected to the mechanical carrier component (5) by means of a screw joint (13).

5. Controller according any one of the claims 1 to 3, **characterized in that** the housing (11) is connected to the mechanical carrier component (5) by means of a clip joint (14).

6. Controller according to any one of the preceding claims, **characterized in that**
the user interface (9) is on the outside of the housing (11) or is accessible from the outside of the housing (11).

7. Controller according to any one of the preceding claims, **characterized in that**
the housing (11) as such is movable relative to the mechanical carrier component (5) or has a movable or deformable part that has the function of the user interface (9) and
a control operation is performed by manipulating the movable housing (11) as such or the movable or deformable part of the housing (11), in particular like manipulation of a push button.

8. Controller according to any one of the preceding claims, **characterized in that**
the remotely located electronic device is a headset (2) of a mobile phone (1).
